# EUROPEAN PATENT APPLICATION

(11) **EP 3 643 411 A1**
(43) Date of publication of application: **29.04.2020**
(21) Application number: 18202787.0
(22) Date of filing: 26.10.2018
(51) Int. Cl.: B05C 5/02, B29C 48/30

(54) **SLOT-DIE COATING APPARATUS**

(71) Applicant: Nederlandse Organisatie voor toegepast- natuurwetenschappelijk onderzoek TNO, 2595 DA 's-Gravenhage (NL)
(72) Inventor: The designation of the inventor has not yet been filed
(74) Representative: V.O.

(57) **Abstract**

A slot-die coating apparatus is provided for manufacturing a patterned coating layer (3) on a substrate surface (Is) of a substrate (1). The apparatus comprises a slot-die coating head (2), a coating fluid supply system (7), and a substrate carrier (6) for carrying the substrate (1). The slot-die coating head comprises a first head portion (2A) and a second head portion (2B), which head portions are mutually mechanically coupled in a configurable relative orientation and which define a space (5_{I}, 5_{II}) between them determined by the configured relative orientation, wherein the coating head comprises an inlet for providing coating fluid from the coating fluid supply system (7) that communicates with a lateral distribution channel (23) inside the coating head. The slot-die coating apparatus comprises an actuator to configure the relative orientation. In a first relative orientation the slot-die coating head (2) enables a placement of a shim (8) into the space or a removal thereof from the space. In a second relative orientation the slot-die coating head (2) is configured to clamp the shim within the space, wherein the first head portion (2A) and the second head portion (2B) restrict the space as a flow resistive output channel from the lateral distribution channel towards a slit-shaped outflow opening (22), wherein the shim partitions the flow resistive output channel and the slit-shaped outflow opening (22).

## Description

### FIELD AND BACKGROUND

The present disclosure relates to a slot-die coating method and apparatus for manufacturing a patterned coating layer on a substrate.

Organic coatings layers are typically applied to a substrate as a liquid solution, e.g. for manufacturing OLED or OPV devices. For many applications, e.g. manufacturing of photo-active layers and/or light-emitting layers, it may be desired to provide one or more homogeneous coating layers on a substrate, i.e. having a homogeneous layer thickness. One technique for manufacturing a homogeneous coating layer may be referred to as "slot-die coating". This technique typically comprises providing a slot-die coating head arranged over a substrate surface. The slot-die coating head comprising an outflow opening forming a slit that is arranged in a slit direction over the substrate surface. A coating fluid, e.g. supplied by a coating fluid supply, flows through the outflow opening onto the substrate surface. A relative movement between the outflow opening and the substrate surface is controlled along a coating direction. The coating direction is typically transverse, i.e. having a perpendicular component, to the slit direction. In this way a homogeneous layer may be manufactured along a width of the slit onto the substrate surface.

In addition to having a homogeneous coating layer, it may be desired to provide a patterning of the coating on the substrate surface, e.g. wherein the patterned coating comprises coated areas on the substrate surface separated by uncoated areas. For example, for the manufacture of photo-active layers and/or light-emitting layers it may be desired to provide separated active areas on a substrate, e.g. for building an array of photo-cells. A patterning in the coating direction may be provided by temporarily interrupting the supply of coating fluid and/or by retracting the coating head in a direction away from the surface to be coated. In order to provide for a patterning in the slit direction, a shim may be accommodated inside the outflow opening. The shim partitions the outward flow in the slit direction.

US2017/0266687A1 discloses a slot-die coating apparatus having an applicator head, a slot die assembly and a securing mechanism for securing the slot die assembly to the applicator head. The slot die assembly includes a die extruder comprising one or more fluid input ports configured to receive a fluid from the applicator head, a shim positioned adjacent to the die extruder, and a plate positioned adjacent to the shim on a side of the shim opposite from the die extruder. The securing mechanism includes a securing component at one of the applicator head and the slot die assembly and a corresponding securing component at the other of the applicator head and slot die assembly. The construction of the known slot-die coating apparatus makes it possible to remove or replace the die and shim extruder assembly from the applicator head. Therewith the slot-die coating apparatus can be used to manufacture a variety of products having mutually different coating patterns and/or having a set of layers with mutually different coating patterns. It is however a disadvantage of the known slot-die coating apparatus that such a replacement is relatively time-consuming, i.e. requiring a relatively long down-time which is at the cost of production efficiency.

Accordingly, there is a need to provide measures to facilitates a quicker replacement of a shim.

### SUMMARY

According to a first aspect a slot-die coating apparatus is provided for manufacturing a patterned coating layer on a substrate surface of a substrate. The apparatus comprises a slot-die coating head, a coating fluid supply system, and a substrate carrier for carrying the substrate. The slot-die coating head comprises a first head portion and a second head portion which are mutually mechanically coupled in a configurable relative orientation and which define a space between them determined by the configured relative orientation. The coating head comprises an inlet communicating with a lateral distribution channel in the coating head. The slot-die coating apparatus comprises an actuator to configure the relative orientation, wherein in a first relative orientation the slot-die coating head enables a placement of a shim into the space or a removal thereof from the space and in a second relative orientation the slot-die coating head is configured to clamp the shim within the space. In that second relative orientation the first head portion and the second head portion restrict the space as a flow resistive output channel from the lateral distribution channel towards a slit-shaped outflow opening, and the shim partitions the flow resistive output channel and the slit-shaped outflow opening.

As the first head portion and the second head portion are mutually mechanically coupled in a configurable relative orientation, defining a space between them determined by the configured relative orientation, a rapid (re) placement of the shim is possible by temporarily bringing the first and the second head portion in their first relative orientation. As one of the head portions can have a well known position with respect to the substrate carrier, which defines the position of the substrate, the alignment of the coating head and the substrate carrier is not disturbed.

In an embodiment, the shim comprises a common segment that extends in a lateral direction and one or more partitioning segments extending from the common segment in a longitudinal direction transverse to the lateral direction, wherein the shim when clamped within the space between the first and the second head portion in their second relative orientation, has its one or more partitioning segments extending from the common segment towards the outflow opening. The common segment integrates the partitioning segments into a single body, which can be handled easily.

In an embodiment the shim comprises grips that laterally extend outside the space wherein the shim is clamped in the second relative orientation. This further facilitates a shim (re)placement.

The shim may abut to a rim inside the head, or other means may be provided to define the position of the shim relative to the coating head. Alternatively, the position of the shim may be defined solely by clamping forces exerted by the head portions in the second relative orientation. In that case the head portions may have an intermediate relative orientation, wherein the shim can still be aligned with the head by applying mild forces thereon with an alignment tool, while avoiding unintended movements of the shim (for example caused by gravitation or vibrations.

In an embodiment the change of relative orientation between the first and the second head portion is a rotation around an axis parallel to a direction defined by said outflow opening. In this way the orientation of the second head portion is fully determined by the axis, which is fixed and by the rotation around the axis. In this way an alignment between the head portions can be maintained relatively easily within relatively narrow tolerances.

In an embodiment, the first head portion is integral with a third head portion, with which it is connected via a thinned portion and wherein the second head portion is fixed to the third head portion. The thinned portion allows the first head portion to hinge along an axis defined by the thinned portion. Therewith the first and the second head portion are mutually mechanically coupled in a configurable relative orientation. This embodiment does not require separate parts to allow the first and second head portion to have a configurable relative orientation. As the angle of rotation between the first relative orientation and the second relative orientation can be relatively small, for example in a range between 0.01 and 1 degree, the rotation can be easily achieved within the elastic range of the material, Rigid materials like stainless steel and titanium may be used for this purpose.

In an embodiment, the actuator comprises a bellows that extends in the direction of the rotation axis, substantially over the full width of the second head portion. In this construction, the bellows, when pressurized with a fluid, e.g. a gas or a liquid will exert a homogeneous force over the full width of the second head portion, which contributes to a proper fit of the shim between the first and the second head portion in the second relative orientation.

In an embodiment, the shim is provided as a shim assembly that in addition to the shim comprises a first and a second lip portion at mutually opposite faces of the shim, wherein the lip portions comprise recesses adjacent to openings in the shim. The presence of the recesses makes it possible to avoid a capillary flow of coating liquid also if the shim is very thin, e.g. having a thickness less than 100 micron, e.g. less than 50 micron, or even less than 20 micron. When using a relatively thin shim, it is rendered possible to use a coating liquid with a relatively low viscosity, e.g. a viscosity lower than a few mPs. By providing the shim as an assembly in this way, the recesses will always have the proper position.

According to a second aspect a method is provided for manufacturing a patterned coating layer on a substrate surface of a substrate. The method comprises
- Providing a slot-die coating apparatus, with a slot-die coating head, a coating fluid supply system, and a substrate carrier for carrying the substrate. The slot-die coating head comprises an inlet for receiving coating fluid from the coating fluid supply system and a lateral distribution channel communicatively coupled to the inlet. The slot-die coating head has a first head portion and a second head portion which are movably coupled to each other and which define a space between them.
- Bringing the first and the second head portion into a first relative orientation wherein the space is relatively wide.

Placing a shim into the relatively wide space.
- Bringing the first and the second head portion into a second relative orientation wherein the first head portion and the second head portion restrict the space as a flow resistive output channel from the lateral distribution channel leading towards a slit-shaped outflow opening. In the second relative orientation the shim partitions the flow resistive output channel into flow resistive output channel partitions having a respective channel opening within the slit-shaped outflow opening.

Supplying a coating fluid to the inlet of the slot-die coating head, the coating fluid subsequently flowing from the inlet via the lateral distribution channel, and the flow resistive output channel partitions through their respective channel openings onto the substrate surface.

In an embodiment of the method the shim is placed from a position outside the coating head into the relatively wide space by a translation in the lateral direction or the shim is removed from the relatively wide space towards a position outside the coating head by a translation in the lateral direction. This embodiment is advantageous in that it does not require a displacement of the coating head away from the substrate carrier.

### BRIEF DESCRIPTION OF THE DRAWINGS

These and other aspects are described in more detail with reference to the drawing. Therein:
FIG. 1 schematically shows a slot-die coating apparatus according to the first aspect;
FIG. 1A shows a cross-section of the coating head, according to IA-IA in FIG. 1;
FIG. 1B shows a side view according to IB in FIG. 1A;
FIG. 2A, 2AB and 2B shows a slot-die coating head in a first, a second and a third operational stage respectively;
FIG. 3 shows an aspect of the coating head in an alternative embodiment;
FIG. 4 shows an alternative embodiment of a shim;
FIG. 5 shows an alternative embodiment of a coating head;
FIG. 6A, 6AB and 6B show an alternative slot-die coating head in a first, a second and a third operational stage respectively;
FIG. 7A, 7B shows an further alternative embodiment of a shim;
FIG. 8, 8A, 8B show an embodiment of a shim provided as a shim assembly; Therein FIG. 8 shows a front-view. FIG. 8A shows a bottom view according to VIII in FIG. 8, and FIG. 8B shows the shim-assembly accommodated in a coating head according to a cross-section VIIIB-VIIIB in FIG. 8;
FIG. 9 schematically shows a method according to the second aspect;
FIG. 10A, 10B, 10C show subsequent stages in a preferred embodiment of the method.

### DETAILED DESCRIPTION OF EMBODIMENTS

Like reference symbols in the various drawings indicate like elements unless otherwise indicated.

Unless otherwise defined, all terms (including technical and scientific terms) used herein have the same meaning as commonly understood by one of ordinary skill in the art to which this invention belongs as read in the context of the description and drawings. It will be further understood that terms, such as those defined in commonly used dictionaries, should be interpreted as having a meaning that is consistent with their meaning in the context of the relevant art and will not be interpreted in an idealized or overly formal sense unless expressly so defined herein. In some instances, detailed descriptions of well-known devices and methods may be omitted so as not to obscure the description of the present systems and methods. Terminology used for describing particular embodiments is not intended to be limiting of the invention. As used herein, the singular forms "a", "an" and "the" are intended to include the plural forms as well, unless the context clearly indicates otherwise. The term "and/or" includes any and all combinations of one or more of the associated listed items. It will be further understood that the terms "comprises" and/or "comprising" specify the presence of stated features but do not preclude the presence or addition of one or more other features. All publications, patent applications, patents, and other references mentioned herein are incorporated by reference in their entirety. In case of conflict, the present specification, including definitions, will control.

As used herein, the term "substrate" has its usual meaning in materials science as an object comprising a surface on which processing is conducted, in this case layer deposition. In a typical semi-conductor manufacturing process, the substrate may be a silicon wafer. In the production of flexible electronics, the substrate typically comprises a foil. The term "foil" refers to a sheet comprising one or more layers of material. Preferably, the foil is flexible such that it can be used in a roll-to-roll (R2R) or roll to sheet (R2S) manufacturing process. For such purpose, a foil may be considered flexible if it can be rolled or bent over a radius of curvature of 50 cm or less, e.g. 12 cm, without losing its essential functionality, e.g. an electronic functionality. Alternatively, or in conjunction a foil may be considered flexible if it has a flexural rigidity smaller than 500 Pa·m³.

As used herein, the term "coating" is used to indicate the process of applying a layer of material. The term "coating layer" indicates the layer of material covering a part of a substrate or intermediate layer. Typical for the coating layers as described herein is that they may be initially applied as a fluid or liquid to allow a degree of self-assembly or relocation of the coating after deposition, e.g. driven by differences in surface energy. After the coating layer achieves a desired patterning, the coating layer may be hardened, e.g. by curing and/or drying.

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. The description of the exemplary embodiments is intended to be read in connection with the accompanying drawings, which are to be considered part of the entire written description. In the drawings, the size and relative sizes of systems, components, layers, and regions may be exaggerated for clarity. Embodiments are described with reference to cross-section illustrations that are schematic illustrations of possibly idealized embodiments and intermediate structures of the invention.

In the description, relative terms as well as derivatives thereof should be construed to refer to the orientation as then described or as shown in the drawing under discussion. These relative terms are for convenience of description and do not require that the system be constructed or operated in a particular orientation unless stated otherwise. It will further be understood that when an element or layer is referred to as being "on", "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. It will further be understood that when a particular step of a method is referred to as subsequent to another step, it can directly follow said other step or one or more intermediate steps may be carried out before carrying out the particular step.

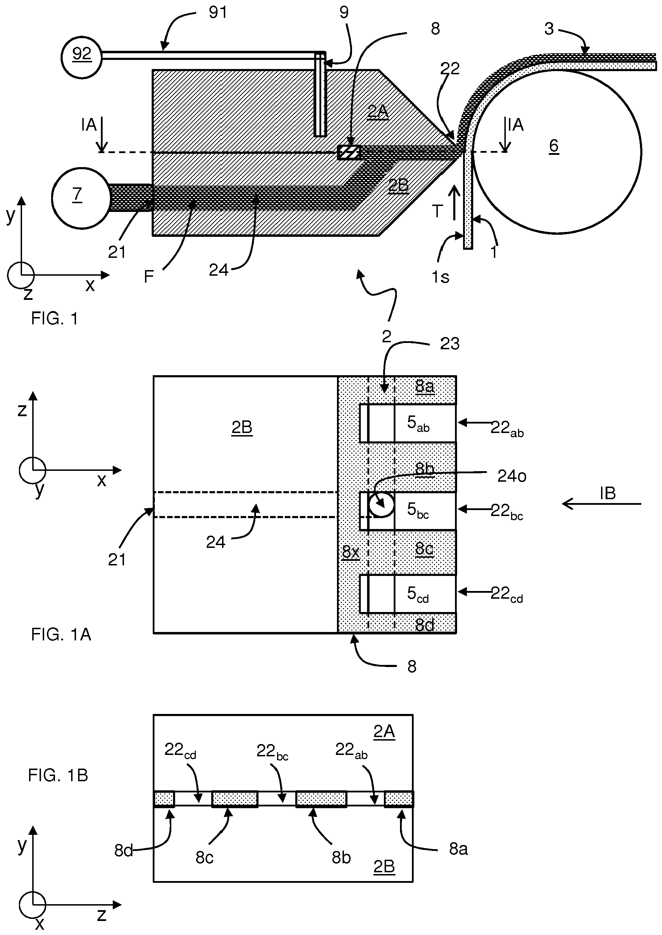

FIG. 1 schematically shows a slot-die coating apparatus for manufacturing a patterned coating layer 3 on a substrate surface Is of a substrate 1 in a coordinate system xyz.

The apparatus comprises a slot-die coating head 2, a coating fluid supply system 7, and a substrate carrier 6 for carrying the substrate 1. FIG. 1A shows a cross-section of the coating head 2, according to IA-IA in FIG. 1. In operation, the substrate 1 is transported relative to the coating head 2 in a transport direction T, here parallel to the axis y. This may be achieved in that the substrate 1 is moved in front of the coating head 2 in that direction as in this example, or in that the coating head 2 is moved over the substrate, or by a combination of both. In operation the coating head 2 deposits a coating fluid F on the substrate surface Is through an slit 22 extending in a direction z which is usually transverse to the transport direction T (y). The coating head 2 may have a width as the dimension in the lateral direction z in the order of a few tenths of a meter to a few meters.

In the example shown, the coating head 2 is arranged substantially horizontally, i.e. in operation the coating fluid has a velocity in a horizontal plane. Alternatively, the coating head 2 may be tilted upwards or downwards. In another embodiment the coating head points downward.

In FIG. 1, the substrate carrier 6 is schematically represented by a roll which carries the substrate 1 along the coating head 2. A head positioner and/or a roll positioner may be provided to control a distance between the head and the substrate surface Is.

Alternatively, the substrate carrier may be provided as a table which is arranged in front of the coating head, wherein the table and the coating head are movable with respect to each other.

The substrate carrier may be part of a substrate handling arrangement, which in addition to the substrate carrier may comprise one or more of a substrate providing station, from which the substrate is provided, for example by unwinding from a roll, and a substrate receiving station, wherein the coated substrate is received for storage and transport, for example by winding the coated substrate on a roll. Alternatively or additionally, the substrate handling arrangement may carry the substrate along other deposition devices or processing devices to process a layer on the substrate.

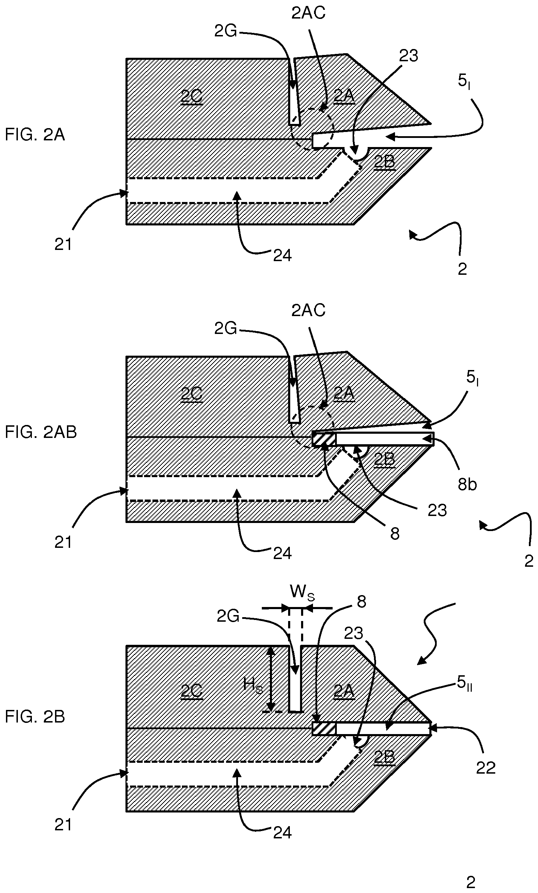

As shown in more detail in FIG. 2A, 2AB and 2B, the slot-die coating head 2 comprises a first head portion 2A and a second head portion 2B. The first head portion 2A is integral with a third head portion 2C, with which it connected via a thinned portion 2AC. As only a small rotation is required to configure the head portions, relative deformations of the material of the thinned portion can be relatively small e.g. less than 0.2%. The second head portion 2B is fixed to the third head portion 2C. The thinned portion 2AC allows the first head portion 2A to hinge along an axis defined by the thinned portion 2AC. Therewith the first and the second head portion are mutually mechanically coupled in a configurable relative orientation. The first and the second head portion define a space between them which is determined by the configured relative orientation. The coating head comprises an inlet 21 for providing a coating fluid F from the coating fluid supply system 7 to within the space via a lateral distribution channel 23 between the first head portion 2A and the second head portion 2B.

FIG. 2A shows a first relative orientation, wherein the first head portion 2A is turned away from the second head portion 2B, therewith providing for a relatively wide space 5_{I}. The slot-die coating head 2 with the first and the second head portion in the first relative orientation enables a placement of a shim into the space or a removal thereof from the space.

FIG. 2AB shows the situation after the shim 8 is placed within the relatively wide space 5_{I} between the head portions 2A, 2B, still in their first relative orientation.

FIG. 2B shows a second relative orientation, wherein the first head portion 2A is turned towards the second head portion 2B and therewith provides for a narrow space 5_{II}. In FIG. 2B it is further shown that the first and the second head portion in the second relative orientation clamp the shim 8 within the narrowed space 5_{II}. The first head portion 2A and the second head portion 2B therein restrict the space as a flow resistive output channel from the lateral distribution channel 23 towards a slit-shaped outflow opening 22, wherein the shim 8 partitions the flow resistive output channel and the slit-shaped outflow opening 22. The shim 8 may be manufactured of a metal, e.g. stainless steel, or of a polymer, e.g. kapton foil. A thickness of the shim may be selected, dependent on the viscosity of the coating fluid F used. For example the shim may have a thickness in the range of 100 - 500 micron if the viscosity of the coating fluid is relatively high, e.g. higher than 30 mPs, e.g. higher than 40 mPs, for example 60 mPs. In various applications, e.g. manufacturing of OLEDS and photovoltaic products coating fluids having a lower viscosity may be used e.g. a viscosity below 10 mPs. In that case the thickness of the shim may be reduced, e.g. to a few tens of micron.

The slot-die coating apparatus comprises an actuator 9 to configure the relative orientation between the first and the second head portion 2A,2B. The actuator is for example a handle or grip which allows an operator to manually change the relative orientation. In the embodiment shown in FIG. 1, the actuator 9 is a bellows 9 that is arranged within a slit 2G that partly separates the first and the second head portion 2A, 2B, to provide for the thinned portion 2AC. An aspect ratio height (Hs)/width(Ws) of the slit 2G (See FIG. 2B) is preferably in a range of 5-10. For example if the height Hs is 50 mm, the width Ws may be in the order of 5-10 mm. The bellows 9 is coupled via a conduit 91 to pressurizing means 92, with which a fluid can be pressurized. The fluid is for example a liquid, e.g. a hydraulic liquid or a gas. If the fluid inside the bellows 9 is pressurized, the bellows forces the first head portion 2A and the second head portion 2B in their second relative position. If the bellows 9 is evacuated, the first and the second head portion 2A, 2B may be reconfigured in their first relative position. If the bellows 9 extend over the full width of the slit 2G, a uniform pressure is exerted therewith over the full width of the second head portion 2B.

The lateral distribution channel 23 serves to distribute the coating fluid F during operation in a lateral direction, which is the direction (z) defined by the slit shaped outflow opening 22. Preferably a pressure drop along the lateral distribution channel 23 is relatively small, so as to minimize thickness variations of the coated layer other than those specifically determined by the pattern of the shim. In practice this implies that the pressure drop within the lateral distribution channel 23 is at least 10 times as small, or even 100 times as small as the pressure drop in the flow resistive output channel. In the embodiment shown, the lateral distribution channel 23 is formed as a groove extending in the lateral direction and having a uniform cross-section. This embodiment is preferred as it provides for the proper distribution independent of the shim applied.

The cross-section in FIG. 1A also shows an exemplary shim 8 in more detail. Furthermore, FIG. 1B shows a side-view according to IB in FIG. 1A. The shim 8 comprises a common segment 8x that extends in the lateral direction z, which corresponds to the direction of the outflow opening 22 and comprises partitioning segments 8a, 8b, 8c, 8d that extend from the common segment in a longitudinal direction x transverse to the lateral direction. In this case, the shim is clamped within the space between the first and the second head portion, as shown in FIG. 1. As shown in FIG. 1A the shim in this arrangement has its one or more partitioning segments 8a, 8b, 8c, 8d extending from the common segment towards the outflow opening 22. Therewith the shim 8 partitions the flow resistive output channel into flow resistive output channel partitions 5_{ab}, 5_{bc}, 5_{cd} each having a proper portion 22_{ab}, 22_{bc}, 22_{cd} of the slit-shaped outflow opening 22.

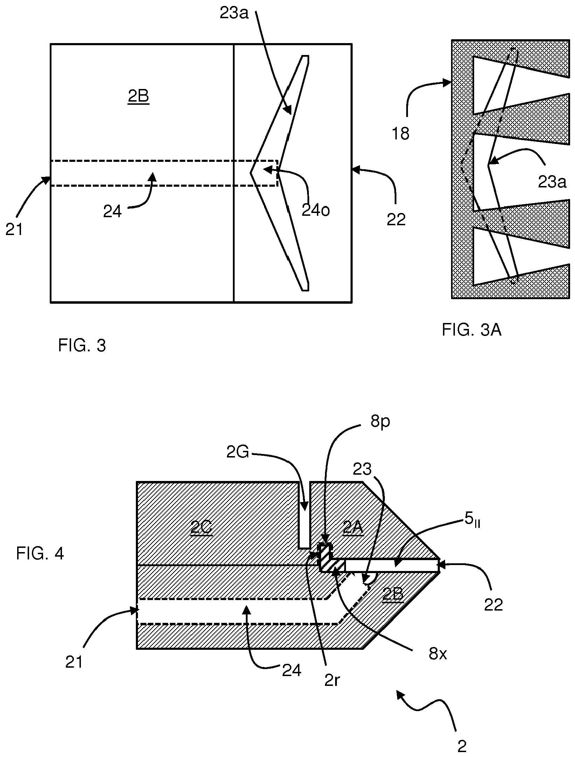

Alternative configurations of the lateral distribution channel are possible, for example in the form illustrated in FIG. 3, also denoted as "coat hanger" channel 23a. Therein the channel 23a slants towards the outflow opening 22 in a direction away from the opening 24o where it receives the coating fluid. At the same time the cross-sectional area of this channel 23a diminishes in a direction away from the opening 24o. This design is advantageous in that the overall pressure drop can be lower than is the case with a lateral distribution channel 23 as shown in FIG. 1A. It is less advantageous in the sense that it is optimal for a relatively specific set of operating conditions like viscosity of the coating fluid and the type of shim. In case the distribution channel 23a is not optimal in certain circumstances, it may be considered to provide for a compensation by the form of the shim. For example, as shown in FIG. 3A, the shim 18 may be configured to provided for gradually narrowing or widening outflow channel partitions.

FIG. 4 shows an embodiment wherein the common segment of the shim 8 is provided with a laterally extending portion 8p protruding out of a plane defined by the common segment and the one or more partitioning segments. In the embodiment shown the laterally extending, protruding portion 8p is a bent end of the common segment 8x. The laterally extending, protruding portion 8p fits into a complementary recess 2r within the first head part 2A.

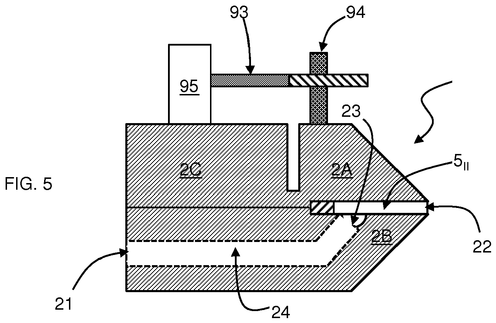

FIG. 5 shows an alternative embodiment, wherein the actuator comprises a motor 95, which rotates a screw 93 in a clockwise or counter clockwise fashion to exert a force on a member 94 fixed to the first head portion and having an inner thread cooperating with that of the screw 93.

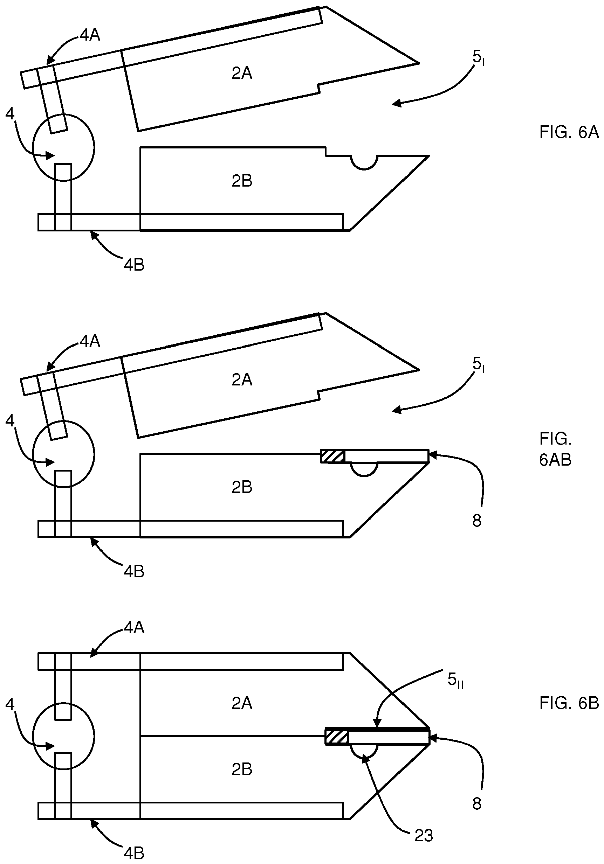

FIG. 6A, 6AB, 6B show an alternative embodiment, wherein the first and the second head portion 2A, 2B each are mounted to a respective carrier construction 4A, 4B. These carrier constructions 4A, 4B are coupled to each other by a hinge 4, with which the relative orientation of the head portions can be configured in a first relative orientation as shown in FIG. 6A, 6AB and in a second relative orientation as shown in FIG. 6B.

FIG. 6A shows a first relative orientation, wherein the first head portion 2A is turned away from the second head portion 2B, therewith providing for a relatively wide space 5_{I}. The slot-die coating head 2 with the first and the second head portion in the first relative orientation enables a placement of a shim into the space or a removal thereof from the space.

FIG. 6AB shows the situation after the shim 8 is placed within the relatively wide space 5_{I} between the head portions 2A, 2B, still in their first relative orientation.

FIG. 6B shows a second relative orientation, wherein the first head portion 2A is turned towards the second head portion 2B and therewith provides for a narrow space 5_{II}. In FIG. 2B it is further shown that the first and the second head portion in the second relative orientation clamp the shim 8 within the narrowed space 5_{II}. The first head portion 2A and the second head portion 2B therein restrict the space as a flow resistive output channel from the lateral distribution channel 23 towards a slit-shaped outflow opening 22, wherein the shim 8 partitions the flow resistive output channel and the slit-shaped outflow opening 22.

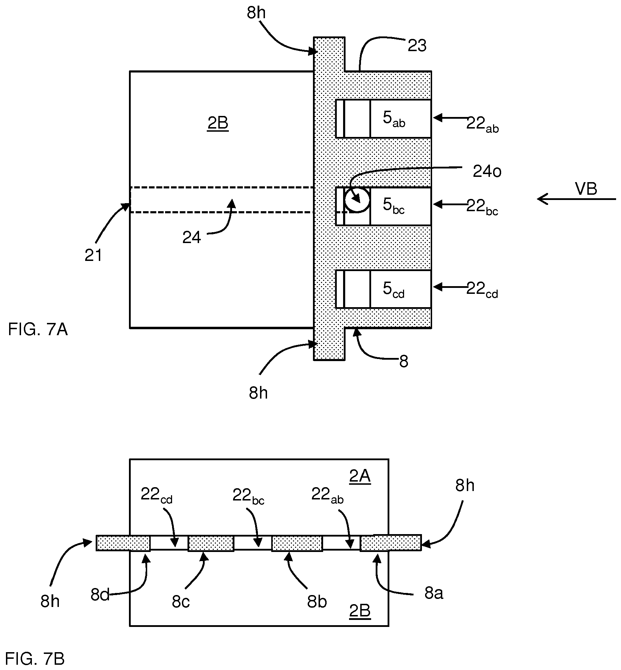

Various embodiments are possible to further facilitate a (re)placement of the shim. For example FIG. 7A, 7B shows an embodiment wherein the shim 8 comprises grips 8h that laterally extend outside the space 5_{II} wherein the shim is clamped in the second relative orientation. Therein FIG. 7B shows a front view according to VIIB in FIG. 7A.

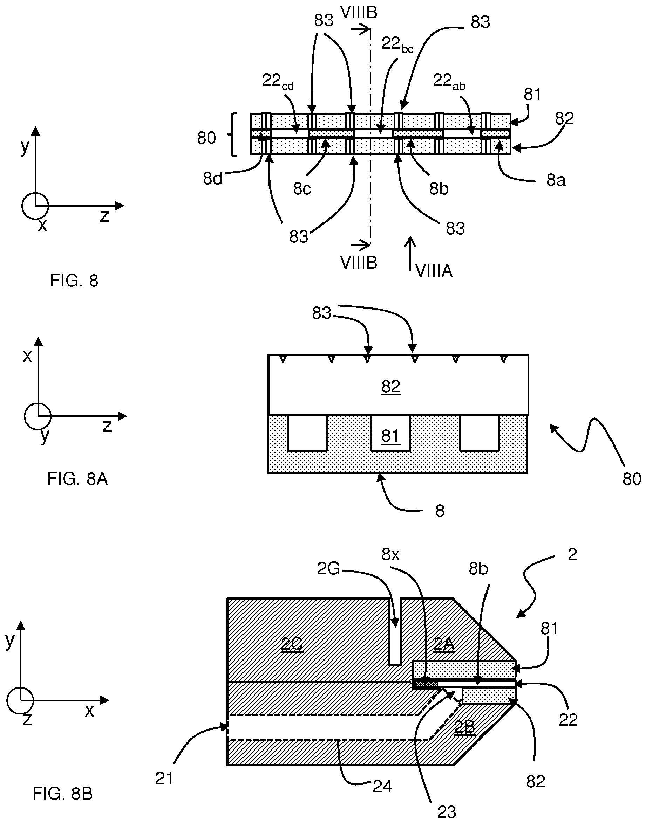

FIG. 8, 8A, 8B show an embodiment wherein the shim 8 is provided as a shim assembly 80 that in addition to the shim 8 comprises a first and a second lip portion 81, 82 at mutually opposite faces of the shim 8, wherein the lip portions comprise a recesses 83 adjacent to openings in the shim. Therein FIG. 8 shows a front-view of the shim assembly 80. FIG. 8A shows a bottom view according to VIII in FIG. 8, and FIG. 8B shows a shim-assembly accommodated in the coating head 2 according to a cross-section VIIIB-VIIIB in FIG. 8.

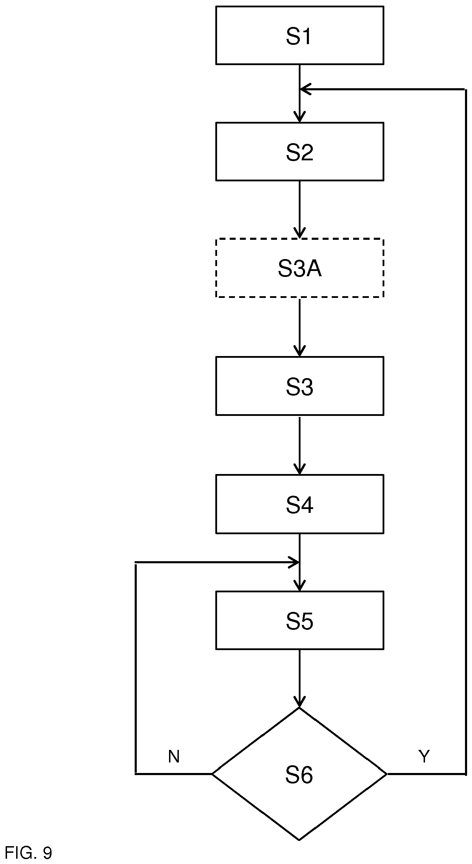

FIG. 9 schematically shows a method for manufacturing a patterned coating layer on a substrate surface of a substrate.

In step S1 of the method a slot-die coating apparatus is provided. As for example illustrated in FIG. 1, the slot-die coating apparatus comprises a slot-die coating head 2, a coating fluid supply system 7, and a substrate carrier 6 for carrying the substrate 1. The slot-die coating head 2 comprises an inlet 21 for receiving coating fluid from the coating fluid supply system and a slit-shaped outflow opening 22 having a slit direction and being communicatively coupled to the inlet via a coating fluid trajectory. The slot-die coating head comprises a first head portion 2A and a second head portion 2B which are movably coupled to each other. A space is defined between the first head portion 2A and the second head portion 2B them for accommodating a shim 8.

In a second step S2 of the method, the first and the second head portion 2A, 2B are brought into a first relative orientation wherein the space 5_{I} is relatively wide, as shown for example in FIG. 2A, and FIG. 6A.

In a third step S3 a shim 8 is placed into the relatively wide space 5_{I} as shown for example in FIG. 2AB and in FIG. 6AB. S3A is an optional step, wherein an earlier placed shim (if present) is removed.

In a fourth step S4 the first and the second head portion are brought into a second relative orientation wherein the space is relatively small and wherein the shim is clamped between the first head portion 2A and the second head portion 2B, as shown for example in FIG. 2B and in FIG. 6B. Subsequent to step S4, the shim 8 partitions the flow resistive output channel and the slit-shaped outflow opening 22. In the example of FIG. 1A, 1B, the slit-shaped outflow opening 22 is partitioned into smaller openings 22_{ab}, 22_{bc} and 22_{cd}. Also the flow resistive output channel being the portion of the restricted space 5_{II} between the lateral distribution channel 23 and the outflow opening 22 is partitioned into corresponding flow resistive output channel partitions 5_{ab}, 5_{bc}, 5_{cd}.

In a fifth step S5, a coating fluid is supplied, for example by a coating fluid supply 7 as shown in FIG. 1 to an inlet 21 of the slot-die coating head 2 and the coating fluid to flow via the lateral distribution channel 23, via the resistive output channel partitions 5_{ab}, 5_{bc}, 5_{cd} to their respective openings 22_{ab}, 22_{bc} and 22_{cd} on the substrate surface Is of a substrate 1.

If step S6 it is determined whether or not a different deposition pattern is required, for example for another layer in a stack of layers of a product or for another product. If this is the case (Y), steps S2, S3, S4 can be repeated, wherein the shim which was placed in the previous iteration of step S3 is removed in step S3A. If this is not the case, the deposition process can proceed in step S5, for example with another coating liquid, and/or in another product.

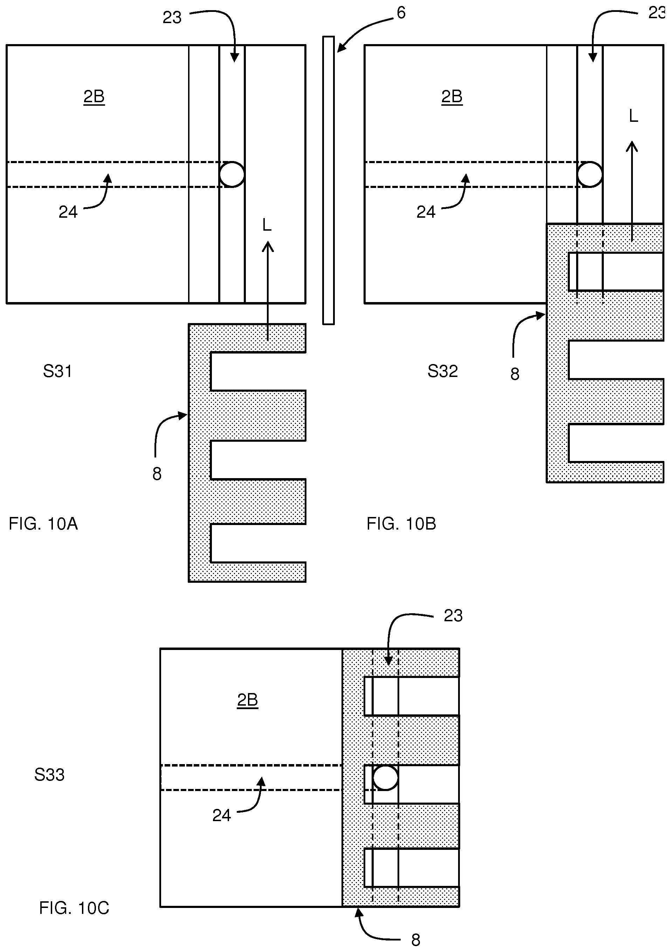

In an embodiment of the method as illustrated in FIG. 10A, 10B, 10C, the shim 8 is placed from a position outside the coating head 2 into the relatively wide space by a translation in the lateral direction L.

FIG. 10A shows a first stage S31 of step S3, wherein the shim is outside the coating head 2 and is subject to the translation L in the lateral direction towards the coating head 2. FIG. 10B shows a second stage S32 of step S3, wherein the shim 8 is partly inside the coating head 2 and is translated further in the lateral direction L inside the coating head 2. FIG. 10C shows a third stage S33 wherein step S3 is just completed and the shim 8 is in its destination position inside the coating head 2. Analogously, the shim 8 can be removed from the relatively wide space towards a position outside the coating head 2 by a translation in the lateral direction. In that case FIG. 10C, FIG. 10B and FIG. 10A respectively indicate a first, a second and a third stage of step S3A.

The above-discussion is intended to be merely illustrative of the present system and should not be construed as limiting the appended claims to any particular embodiment or group of embodiments. Thus, while the present system has been described in particular detail with reference to specific exemplary embodiments thereof, it should also be appreciated that numerous modifications and alternative embodiments may be devised by those having ordinary skill in the art without departing from the scope of the present systems and methods as set forth in the claims that follow. The specification and drawings are accordingly to be regarded in an illustrative manner and are not intended to limit the scope of the appended claims.

In interpreting the appended claims, it should be understood that the word "comprising" does not exclude the presence of other elements or acts than those listed in a given claim; the word "a" or "an" preceding an element does not exclude the presence of a plurality of such elements; any reference signs in the claims do not limit their scope; several "means" may be represented by the same or different item(s) or implemented structure or function; any of the disclosed devices or portions thereof may be combined together or separated into further portions unless specifically stated otherwise. The mere fact that certain measures are recited in mutually different claims does not indicate that a combination of these measures cannot be used to advantage.

## Claims

1. A slot-die coating apparatus for manufacturing a patterned coating layer (3) on a substrate surface (Is) of a substrate (1), the apparatus comprising a slot-die coating head (2), a coating fluid supply system (7), and a substrate carrier (6) for carrying the substrate (1);
the slot-die coating head comprising a first head portion (2A) and a second head portion (2B), which head portions are mutually mechanically coupled in a configurable relative orientation and which define a space (5_{I}, 5_{II}) between them determined by the configured relative orientation, wherein the coating head comprises an inlet for providing coating fluid from the coating fluid supply system (7) that communicates with a lateral distribution channel (23) inside the coating head;
the slot-die coating apparatus comprising an actuator to configure the relative orientation, wherein in a first relative orientation the slot-die coating head (2) enables a placement of a shim (8) into the space or a removal thereof from the space and in a second relative orientation the slot-die coating head (2) is configured to clamp the shim within the space, wherein the first head portion (2A) and the second head portion (2B) restrict the space as a flow resistive output channel from the lateral distribution channel towards a slit-shaped outflow opening (22), wherein the shim partitions the flow resistive output channel and the slit-shaped outflow opening (22).

2. The slot-die coating apparatus according to claim 1, wherein the shim (8) comprises a common segment (8x) that extends in a lateral direction and one or more partitioning segments (8a, 8b, 8c, 8d) extending from the common segment in a longitudinal direction transverse to the lateral direction, wherein the shim when clamped within the space between the first and the second head portion in their second relative orientation, has its one or more partitioning segments extending from the common segment towards the outflow opening (22).

3. The slot-die coating apparatus according to claim 2, wherein the common segment is provided with a laterally extending portion protruding out of a plane defined by the common segment and the one or more partitioning segments.

4. The slot-die coating apparatus according to claim 3, wherein the laterally extending portion is a bent end of the common segment.

5. The slot-die coating apparatus according to claim 3 or 4, wherein the a laterally extending, protruding portion fits into a complementary groove within the first or the second head part.

6. The slot-die coating apparatus according to claim 3, 4 or 5, wherein the laterally extending, protruding portion exclusively enables a placement of a shim (8) into the space or a removal thereof from the space by a translation in the lateral direction.

7. The slot-die coating apparatus according to one of the previous claims, wherein the shim (8) comprises grips (8h) that laterally extend outside the space (5_{II}) wherein the shim is clamped in the second relative orientation.

8. The slot-die coating apparatus according to one of the previous claims, wherein the change of relative orientation between the first and the second head portion is a rotation around an axis parallel to a direction defined by said outflow opening.

9. The slot-die coating apparatus according to claim 8, wherein the first head portion (2A) is integral with a third head portion (2C), with which it connected via a thinned portion (2AC) and wherein the second head portion (2B) is fixed to the third head portion (2C).

10. The slot-die coating apparatus according to one of the previous claims, wherein the actuator comprises a bellows that extends in the direction of the rotation axis, substantially over the full width of the second head portion.

11. The slot-die coating apparatus according to one of the previous claims, wherein the shim (8) is provided as a shim assembly (80) that in addition to the shim (8) comprises a first and a second lip portion (81, 82) at mutually opposite faces of the shim (8), wherein the lip portions comprise a recesses (83) adjacent to openings in the shim.

12. A method for manufacturing a patterned coating layer (3) on a substrate surface (Is) of a substrate (1) comprising
- providing (S1) a slot-die coating apparatus, with a slot-die coating head (2), a coating fluid supply system (7), and a substrate carrier (6) for carrying the substrate (1), wherein the slot-die coating head (2) comprises an inlet (21) for receiving coating fluid from the coating fluid supply system and a lateral distribution channel (23) communicatively coupled to the inlet, the slot-die coating head comprising a first head portion (2A) and a second head portion (2B) which are movably coupled to each other and which define a space between them;
- bringing (S2) the first and the second head portion into a first relative orientation wherein the space is relatively wide;
- placing (S3) a shim (8) into the relatively wide space (5_{I});
- bringing (S4) the first and the second head portion into a second relative orientation wherein the first head portion and the second head portion restrict the space as a flow resistive output channel from the lateral distribution channel leading towards a slit-shaped outflow opening (22), and wherein the shim partitions the flow resistive output channel into flow resistive output channel partitions (5_{ab}, 5_{bc}, 5_{cd}) having a respective channel opening (22_{ab}, 22_{bc}, 22_{cd}) within the slit-shaped outflow opening
- supplying (S5) a coating fluid (F) to the inlet (21) of the slot-die coating head, the coating fluid flowing from the inlet (21) via the lateral distribution channel, and via the flow resistive output channel partitions through their respective channel openings onto the substrate surface (Is).

13. The method according to claim 12, wherein the shim (8) is placed from a position outside the coating head (2) into the relatively wide space by a translation in the lateral direction or wherein the shim (8) is removed from the relatively wide space towards a position outside the coating head (2) by a translation in the lateral direction.
